# EUROPEAN PATENT SPECIFICATION

(11) **EP 3 660 201 B1**
(45) Date of publication and mention of the grant of the patent: **22.02.2023**
(21) Application number: 19211638.2
(22) Date of filing: 26.11.2019
(51) Int. Cl.: D06F 39/14

(54) **LAUNDRY TREATING APPARATUS AND METHOD FOR FABRICATING A DOOR PROVIDED THEREAT**
WÄSCHEBEHANDLUNGSVORRICHTUNG UND VERFAHREN ZUR HERSTELLUNG DER DORT VORGESEHENEN TÜR
APPAREIL DE TRAITEMENT DU LINGE ET PROCEDE DE FABRICATION DE LA PORTE QUI Y EST PREVUE

(30) Priority: 27.11.2018 KR 20180148953
(43) Date of publication of application: 03.06.2020
(73) Proprietor: LG Electronics Inc., Seoul 07336 (KR)
(72) Inventor: YOU, Jungsang, Seoul 08592 (KR); KWON, Yongwoo, Seoul 08592 (KR); SEO, Minsoo, Seoul 08592 (KR)
(74) Representative: Ter Meer Steinmeister & Partner

(56) References cited:
- EP-A1- 3 162 944
- EP-A1- 3 162 945
- EP-A1- 3 263 758
- WO-A1-02/34994

## Description

### BACKGROUND

### 1. Technical Field

The present disclosure relates to a laundry treating apparatus having a door configured to open and close a laundry introduction opening of a body.

### 2. Description of the Related Art

A laundry treating apparatus includes an apparatus for washing laundry (or clothes), an apparatus for drying laundry, and an apparatus for washing and drying laundry together. In the laundry treating apparatus, washing laundry is a stroke/course of removing contaminants from the laundry through reaction between water and detergents, and drying laundry is a stroke/course of removing moisture contained in the laundry by use of a hot air supply device provided in the laundry treating apparatus.

Generally, a laundry treating apparatus includes a body having a laundry introduction opening, and a door configured to open and close the laundry introduction opening. In a case that the door includes a circular front glass, a mechanical object (a pin, a hook, etc.) for guiding a precise attachment position when a door frame is coupled to the front glass, cannot be formed at the front glass due to a characteristic of glass. Further, there is no physical reference point for locating the front glass to a proper position of the door frame, due to a characteristic of the circular shape.

Accordingly, an alignment structure for attaching a circular front glass to a proper position of a circular door frame should be provided, and research on a method to make the alignment structure invisible from the outside of a door is required.

Further, an adhesive is used to attach the front glass to the door frame. According to experimental results, the amount of an adhesive to be applied, and time taken for an adhesive filled in an adhesive gun to harden are variable according to an adhesive application method. Thus, research on a method capable of reducing the amount of an adhesive to be applied, and capable of prolonging time taken for an adhesive filled in an adhesive gun to harden, is ongoing.

EP 3 263 758 A1 presents a laundry appliance door assembly with an integrated user interface, whereby said door assembly includes an inner door subassembly to support an inner window, an intermediate door frame that houses the user interface controller, and an outer door screen with an embedded touch film; the inner door subassembly carries a hinge with a wiring harness assembly and the intermediate door frame is adhesively bonded with the inner door subassembly to form an intermediate door subassembly, wherein the outer door screen includes a touch film adhesively attached to the screen and comprising an integrated flexible printed circuit board with touch buttons and a pressure sensitive adhesive located on its facing surface and, wherein the outer door screen is then adhesively bonded to the intermediate door frame to complete the door assembly and the intermediate door frame is adhesively bonded to the front of the inner door subassembly along with a hinge cover and a handle cover adhesively bonded to the back of the inner door subassembly such to hide any visible mechanical fasteners of the door assembly.

EP 3 162 944 A1 presents a laundry treating apparatus including a body provided with a laundry inlet; and a door configured to open and close the laundry inlet, wherein the door includes a door frame; a door cover mounted at one side of the door frame, and provided with a light transmitting region; a mounting frame mounted at the other side of the door frame; a display mounted on the mounting frame to display visual information through the light transmitting region of the door cover; and a display sealing member disposed between the door frame and the mounting frame, and formed to surround the display.

EP 3 162 945 A1 presents a laundry treating apparatus including a main body having a laundry introduction opening, and a door capable of opening and closing the laundry introduction opening, wherein the door includes a door cover defining an appearance of the door, and provided with a transparent region and an opaque region surrounding the transparent region, a display module disposed on a rear surface of the door cover and capable of outputting visual information through the transparent region, and a touch sensor attached to a rear surface of the door cover to cover the transparent region and capable of sensing a touch input applied to the transparent region, wherein the touch sensor is provided with an align mark to allow the touch sensor to be attached to a correct position with respect to the transparent region.

### SUMMARY

Therefore, a first aspect of the present disclosure is to provide a laundry treating apparatus having a front glass formed such that a front surface and a rear surface thereof are flat, the front glass having a complete circular shape.

A second aspect of the present disclosure is to provide an align structure between a front glass and a door frame, at the time of attaching the front glass of a circular shape to the door frame of a circular shape.

A third aspect of the present disclosure is to provide a structure to make the align structure invisible from the outside of a door.

A fourth aspect of the present disclosure is to provide a method capable of minimizing usages of an adhesive for attachment between a front glass and a door frame, and capable of prolonging time taken for the adhesive filled in an adhesive gun to harden.

The object is solved by the features of the independent claims. Preferred embodiments are given in the dependent claims.

In order to achieve the first aspect and in accordance with the purpose of this specification, as embodied and broadly described herein, there is provided a laundry treating apparatus, comprising: a body having a laundry introduction opening; and a door configured to open and close the laundry introduction opening, wherein the door includes: a door frame rotatably coupled to the body, and having an opening which faces the laundry introduction opening in a closed state of the door; and a front glass attached to the door frame, forming a front appearance of the door, and including a transparent region corresponding to the opening, and an opaque region formed to enclose the transparent region, and wherein the front glass is formed of a glass material, and is formed as a complete circle which has flat front and rear surfaces and a preset radius.

A mounting guide having a preset inner diameter is provided at the door frame.

The mounting guide protrudes to enclose an outer circumferential surface of the front glass, in a ring shape.

An adhesive filling groove for filling an adhesive which attaches the front glass to the door frame, is formed on a front surface of the door frame. And the adhesive filling groove may be formed in a ring shape having a preset radius, along a circumference of the mounting guide, so as to enclose the opening.

An interval between the mounting guide and the adhesive filling groove may be constantly maintained along the circumference of the mounting guide.

In order to achieve the second aspect and in accordance with the purpose of this specification, as embodied and broadly described herein, there is provided a laundry treating apparatus, comprising: a body having a laundry introduction opening; and a door configured to open and close the laundry introduction opening, wherein the door includes: a door frame rotatably coupled to the body, and having an opening which faces the laundry introduction opening in a closed state of the door; a front glass attached to the door frame, forming a front appearance of the door, and formed to have a circular shape; and an adhesive applied between the door frame and the front glass, and configured to attach the front glass to the door frame, wherein the front glass includes: a transparent region corresponding to the opening; an opaque region formed to enclose the transparent region; and a transparent align mark formed in the opaque region, and configured to guide an attachment position of the front glass to the door frame, and wherein the adhesive is applied (or disposed) to cover the align mark.

The front glass may be formed as a complete circle having a preset radius. A mounting guide having a preset inner diameter is provided at the door frame, the mounting guide protruding to enclose an outer circumferential surface of the front glass, in a ring shape.

The front glass may be formed such that a front surface and a rear surface thereof are flat.

A center of the opening may be positioned to be eccentric from a center of the door frame, and a center of the transparent region may be positioned to be eccentric from a center of the front glass.

The center of the transparent region may be located at a position corresponding to the center of the opening.

As an example of the front glass, the front glass may include a glass body formed of a glass material having a transparency; and a shielding layer arranged to cover a rear surface of the glass body and forming the opaque region.

The transparent region and the align mark may be a part where the shielding layer is not arranged.

The shielding layer may be formed by being glass-printed on the rear surface of the glass body.

As another example of the front glass, the front glass may include a glass body formed of a glass material having a transparency; and a film arranged to cover the rear surface of the glass body. And the film may include a transparent part formed to have a transparency in correspondence to the transparent region; an opaque part formed to have a non-transparency in correspondence to the opaque region; and an align part formed to have a transparency in correspondence to the align mark.

As still another example of the front glass, the front glass may include a glass body formed of a glass material having a transparency; and a film arranged to cover the rear surface of the glass body. And the film may include a first hole formed to correspond to the transparent region; an opaque part formed to have a non-transparency in correspondence to the opaque region; and a second hole formed to correspond to the align mark.

Further, in order to achieve the second aspect and in accordance with the purpose of this specification, as embodied and broadly described herein, there is provided a method for fabricating a door provided at a laundry treating apparatus, the method comprising: mounting a front glass to a front glass mounting jig, so that a guide mark formed at the front glass mounting jig is seen through a transparent align mark formed at the front glass; and attaching the front glass to a door frame, wherein the front glass includes a transparent region corresponding to an opening of the door frame; and an opaque region formed to enclose the transparent region, and wherein the align mark is formed in the opaque region.

The front glass may be formed as a complete circle having a preset radius. And a mounting guide having a preset inner diameter may be provided at the door frame, the mounting guide protruding to enclose an outer circumferential surface of the front glass, in a ring shape.

A center of the opening may be positioned to be eccentric from a center of the door frame, and a center of the transparent region may be positioned to be eccentric from a center of the front glass.

The attaching of the front glass to the door frame includes applying an adhesive to the door frame mounted to a door frame mounting jig; lifting the front glass mounted to the front glass mounting jig in an absorbing manner, and then mounting onto the door frame mounted to the door frame mounting jig; moving the door frame mounting jig to a compression jig; attaching the front glass to the door frame by using the compression jig; separating the door frame mounting jig from the compression jig, and moving to an initial position; and separating an assembly of the front glass attached to the door frame from the door frame mounting jig.

In order to achieve the third aspect and in accordance with the purpose of this specification, the adhesive may be formed in the same color as the opaque region.

An adhesive filling groove for filling the adhesive is formed at the door frame. And the adhesive filling groove may include an adhesive application part configured to provide a space for applying the adhesive, and formed to enclose the opening; and adhesive collection parts formed to extend in parallel along the adhesive application part, at both sides of the adhesive application part, so as to collect the adhesive leaking to the both sides of the adhesive application part.

The align mark may be arranged to be overlapped with the adhesive application part.

In order to achieve the fourth aspect and in accordance with the purpose of this specification, as embodied and broadly described herein, there is provided a method for fabricating a door provided at a laundry treating apparatus, the method comprising: mounting a front glass to a front glass mounting jig, and mounting a door frame to a door frame mounting jig; applying an adhesive to the door frame; lifting the front glass by absorption, and then mounting onto the door frame; moving the door frame mounting jig to a compression jig; attaching the front glass to the door frame by using the compression jig; separating the door frame mounting jig from the compression jig, and moving to an initial position; and separating an assembly of the front glass attached to the door frame, from the door frame mounting jig, wherein in the applying of the adhesive to the door frame, the adhesive is applied along an adhesive filling groove formed to enclose an opening of the door frame.

The adhesive is applied to the adhesive filling groove in a discontinuous manner, e.g. at several paces along the adhesive filling groove with predefined distances therebetween to have predetermined distances between the portion where the adhesive is applied.

The adhesive applied along the adhesive filling groove plural times in the divided or discontinued manner is distinguished or spaced apart from each other by a predetermined separation interval or distance.

In the applying of the adhesive to the door frame, the adhesive may be applied at least 4 times.

The adhesive filling groove may include an adhesive application part configured to provide a space for applying the adhesive, and formed to enclose the opening.

The adhesive filling groove may include at least one adhesive collection part formed to extend in parallel along the adhesive application part, at one or both sides of the adhesive application part, so as to collect the adhesive leaking to the one or both sides of the adhesive application part.

In the attaching of the front glass to the door frame by using the compression jig, and the separating of the door frame mounting jig from the compression jig and moving to the initial position, a part of the adhesive filled in an adhesive gun may be discarded, so as to prevent a blocking of a hole of the adhesive gun which applies the adhesive.

In the attaching of the front glass to the door frame by using the compression jig, and the separating of the door frame mounting jig from the compression jig and moving to the initial position, the amount of the adhesive to be discarded may be set to be larger than the amount of the adhesive to be applied in the applying of the adhesive to the door frame.

In order to achieve the fourth aspect and in accordance with the purpose of this specification, as embodied and broadly described herein, there is provided a laundry treating apparatus, comprising: a body having a laundry introduction opening; and a door configured to open and close the laundry introduction opening, wherein the door includes: a door frame rotatably coupled to the body, having an opening which faces the laundry introduction opening in a closed state of the door, and having an adhesive filling groove formed to enclose the opening; a front glass attached to the door frame to thus form a front appearance of the door; and an adhesive applied to the adhesive filling groove, and configured to attach the front glass to the door frame.

The adhesive is applied plural times along the adhesive filling groove with a separation interval.

The adhesive filling groove may include an adhesive application part configured to provide a space for applying the adhesive, and formed to enclose the opening; and at least one adhesive collection parts formed to extend in parallel along the adhesive application part, at one or both sides of the adhesive application part, so as to collect the adhesive leaking to the one or both sides of the adhesive application part.

The adhesive application part may be formed in a ring shape having a preset radius.

A center of the adhesive application part may correspond to a center of the front glass.

The front glass may be formed of a glass material, and may be formed as a complete circle having a preset radius.

The front glass may be formed such that a front surface and a rear surface thereof are flat.

The adhesive filling groove may be formed in a ring shape having a preset radius, and a center of the adhesive filling groove may correspond to a center of the front glass.

The front glass may include a transparent region corresponding to the opening; an opaque region formed to enclose the transparent region; and a transparent align mark formed in the opaque region, and configured to guide an attachment position of the front glass to the door frame. And the adhesive may be applied (or disposed) to cover the align mark.

The adhesive may be formed in the same color as the opaque region.

Firstly, since the front glass formed of a glass material is formed as a complete circle and the front surface and the rear surface thereof are formed to be flat, a sophisticated feeling of the door may be more enhanced than in the conventional door cover formed of a synthetic resin material and formed as an incomplete circle having a convex front surface.

Secondly, when the front glass is mounted to the front glass mounting jig, the guide mark formed at the front glass mounting jig is aligned to be seen through the transparent align mark formed in the opaque region of the front glass. This may allow an alignment between the front glass and the door frame.

Thirdly, the adhesive is arranged to cover the align mark, and is formed in the same color as the opaque region. This may allow the align mark for the alignment not to be discerned easily from the outside of the door. Accordingly, the appearance of the door may be enhanced.

Fourthly, in the applying of the adhesive to the door frame, the adhesive is applied along the adhesive application part formed to enclose the opening of the door frame, plural times in a divided manner. This may minimize usages of the adhesive for attachment between the front glass and the door frame, and may prolong time taken for the adhesive filled in the adhesive gun to harden.

Further, in the attaching of the front glass to the door frame by using the compression jig, and the separating of the door frame mounting jig from the compression jig and moving to the initial position, a part of the adhesive filled in the adhesive gun is discarded. This may prevent a blocking of a hole of the adhesive gun for applying the adhesive.

### BRIEF DESCRIPTION OF THE DRAWINGS

FIG. 1 is a perspective view showing an embodiment of a laundry treating apparatus according to the present disclosure.
FIG. 2 is a frontal view of a door shown in FIG. 1.
FIG. 3 is a disassembled perspective view of the door shown in FIG. 2.
FIG. 4 is a planar view of the door shown in FIG. 2.
FIG. 5 is a left side surface view of the door shown in FIG. 2.
FIG. 6 is a rear view of the door shown in FIG. 2.
FIG. 7 is a frontal view of a front glass shown in FIG. 3.
FIG. 8 shows the front glass of FIG. 7, which is seen from the upper side, the lower side, the left side and the right side, respectively.
FIG. 9 is a frontal view of a door frame shown in FIG. 3.
FIG. 10 is a sectional view taken along line 'A-A' in FIG. 2.
FIG. 11 is a conceptual view schematically showing an apparatus for attaching a front glass shown in FIG. 3 to a proper position of a door frame.
FIG. 12 is a flow chart for explaining an assembly process of a front glass and a door frame, using the apparatus of FIG. 11.
FIG. 13 is a conceptual view of a front glass mounting jig shown in FIG. 11.
FIG. 14 is a conceptual view for explaining a method for mounting a front glass to a proper position of a front glass mounting jig in FIG. 12.
FIG. 15 is an enlarged view of part 'B' shown in FIG. 2.

### DETAILED DESCRIPTION OF THE EMBODIMENTS

Hereinafter, a laundry treating apparatus and method for fabricating door provided thereat according to the present disclosure will be described in detail with reference to the accompanying drawings.

A singular representation may include a plural representation unless it represents a definitely different meaning from the context.

The same or equivalent components may be provided with the same or similar reference numbers, even in different embodiments, and description thereof will not be repeated.

In describing the present disclosure, if a detailed explanation for a related known function or construction is considered to unnecessarily divert the gist of the present disclosure, such explanation has been omitted but would be understood by those skilled in the art.

The accompanying drawings are used to help easily understand the technical idea of the present disclosure and it should be understood that the idea of the present disclosure is not limited by the accompanying drawings.

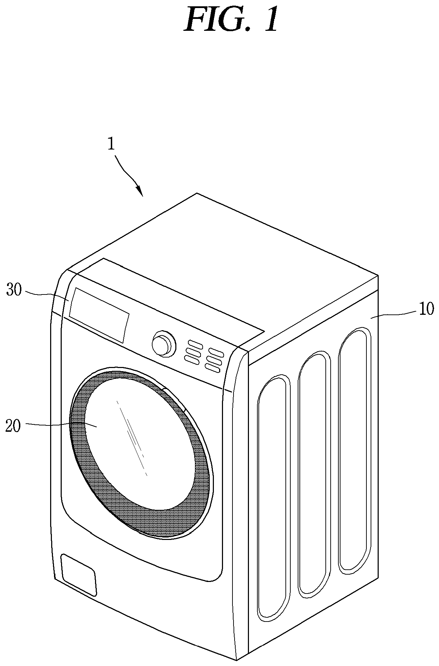

FIG. 1 is a perspective view showing an embodiment of a laundry treating apparatus according to the present disclosure.

Referring to FIG. 1, the laundry treating apparatus includes a body 10, a controller 30 and a door 20.

The body 10 forms the appearance of the laundry treating apparatus, and is provided with a laundry introduction opening for introducing laundry therein. In this embodiment, the laundry introduction opening is formed on a front surface of the body 10 having a hexahedron shape. The laundry introduction opening may be formed to have a circular shape.

A laundry accommodation portion, an inner space communicated with the laundry introduction opening, is provided in the body 10. Laundry is accommodated in the laundry accommodation portion through the laundry introduction opening.

As an example, if the laundry treating apparatus is configured as a laundry drying apparatus, the laundry accommodation portion may be configured as a drum rotatably provided in the body 10.

As another example, if the laundry treating apparatus of the present disclosure is configured as an apparatus for washing and drying laundry, the laundry accommodation portion may be configured as a tub provided in the body 10 and configured to store washing water, and a drum rotatably provided in the tub and configured to accommodate laundry therein.

The controller 30 is configured to display visual information related to a stroke performed in the laundry treating apparatus to a user, and to receive a user's manipulation. For this, the controller 30 may be provided with a display for displaying visual information, and a knob or a button for receiving an input. Alternatively, the controller 30 may be configured as a touch screen having the above two functions.

The controller 30 may be provided at the body 10 or the door 20. In the drawing, the controller 30 is positioned at an upper part of the body 10, above the door 20.

The door 20 is configured to be relatively moveable with respect to the body 10 in order to open and close the laundry introduction opening. In the drawing, the door 20 is configured to be relatively moveable with respect to the body 10 through a hinge unit 24.

Hereinafter, the door 20 will be explained in more detail.

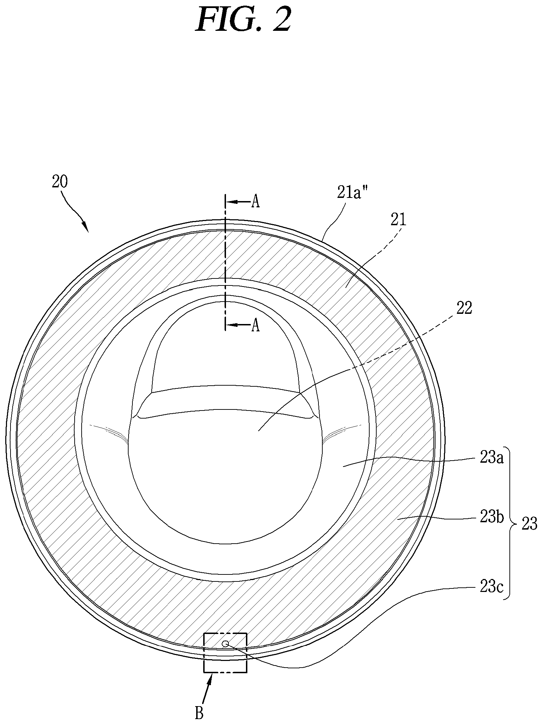

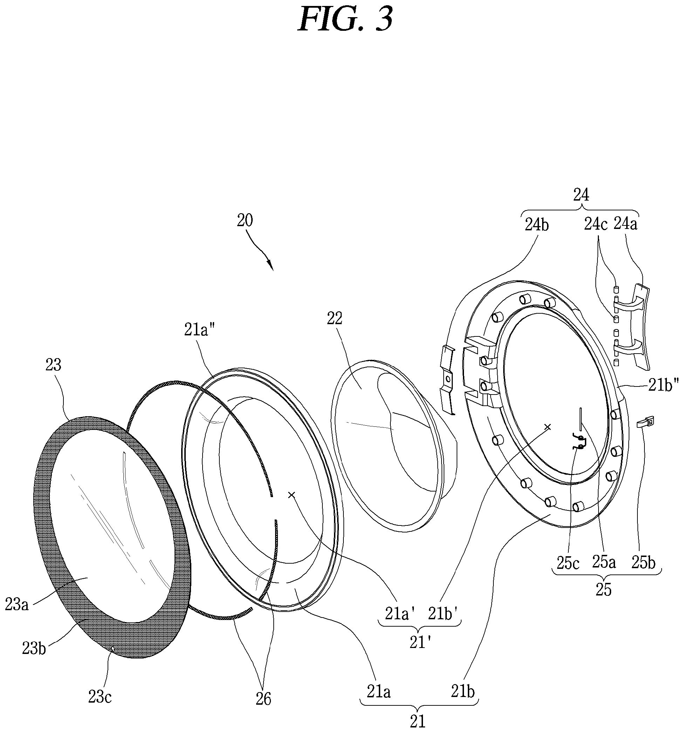

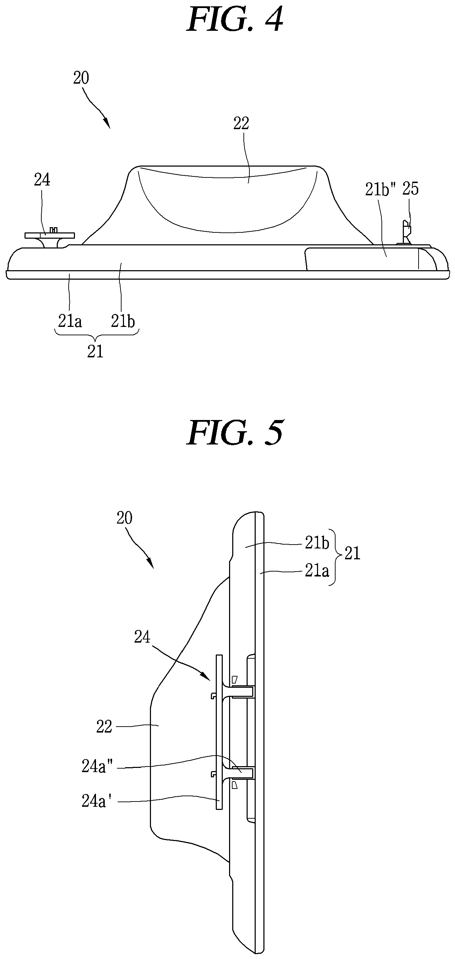

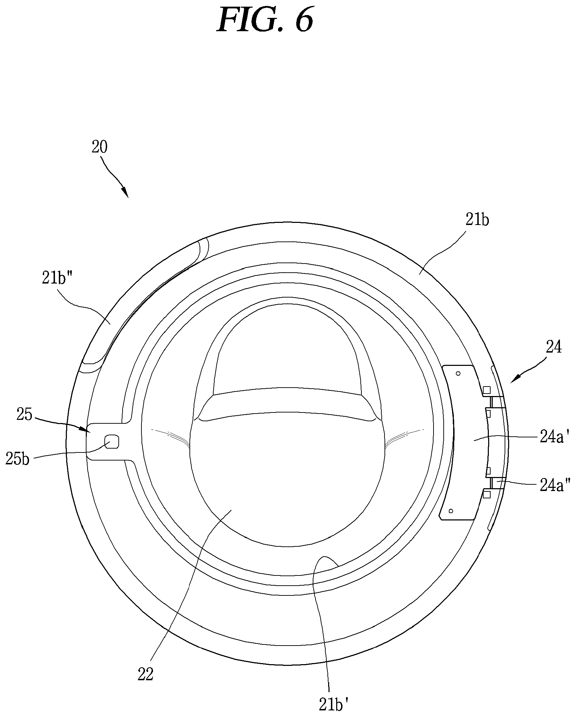

FIG. 2 is a frontal view of the door 20 shown in FIG. 1. FIG. 3 is a disassembled perspective view of the door 20 shown in FIG. 2. FIG. 4 is a planar view of the door 20 shown in FIG. 2. FIG. 5 is a left side surface view of the door 20 shown in FIG. 2. And FIG. 6 is a rear view of the door 20 shown in FIG. 2.

Referring to FIGS. 2 to 6, the door 20 includes a door frame 21, a door window 22 and a front glass 23.

The door frame 21 may be rotatably/pivotable/hingeable coupled to the body 10 by the hinge unit 24. The door frame 21 includes an outer frame 21a and an inner frame 21b. The outer frame 21a and the inner frame 21b may be formed of a synthetic resin material (e.g., an ABS material, a PC material, etc.).

For reference, the names of the outer frame 21a and the inner frame 21b originate from that the outer frame 21a is towards the outside of the body 10, and the inner frame 21b is towards the inside of the body 10, on the basis of the door frame 21 itself when the door 20 is in a closed state. Without such a distinction, the outer frame 21a and the inner frame 21b may be referred to as a first frame and a second frame, respectively.

The door frame 21 is provided with an opening 21' which faces the laundry introduction opening in a closed state of the door 20. The opening 21'may be formed to be concentric with the door frame 21. Alternatively, as shown, the opening 21'may be formed to be eccentric from the door frame 21. The opening 21' may be formed to have a circular shape.

The opening 21' may be referred to as a door window hole in that the door window 22 is installed at the opening 21'. For the formation of the opening 21', openings 21a', 21b' are formed at the outer frame 21a and the inner frame 21b, respectively.

A recess portion 21b" may be formed at the inner frame 21b. In a closed state of the door 20, a user may open the door 20 by pulling the door 20 with putting his or her hand into the recess portion 21b".

The door window 22 is installed at the door frame 21 in correspondence to the opening 21'. The door window 22 is formed of a synthetic resin material having a transparency, and is arranged to correspond to the laundry introduction opening in a closed state of the door 20.

As aforementioned, the door 20 may be installed so as to be rotatable with respect to the body 10 by the hinge unit 24.

The hinge unit 24 may include a hinge 24a, a hinge holder 24b, and a bush 24c.

The hinge 24a is fixed to the body 10, and is rotatably coupled to the door frame 21. The hinge 24a may include a base portion 24a' fixed to the body 10 in the form of a plate, and a rotation coupling portion 24a" protruding from the base portion 24a' and rotatably coupled to the door frame 21. The rotation coupling portion 24a" may be provided in plurality in number, so as to be spaced apart from each other up and down.

The hinge holder 24b is coupled to the door frame 21, and is configured to restrict separation of the rotation coupling portion 24a". The hinge holder 24b is arranged to cover the rotation coupling portion 24a". The hinge holder 24b may be coupled to the hinge holder 24b.

The bush 24c is inserted into a rotation shaft of the rotation coupling portion 24a", thereby making the rotation shaft rotate smoothly.

Under a structure that the hinge unit 24 is mounted to one side of the door 20, a locking device 25 for locking or unlocking the door 20 to or from the body 10 is provided at another side of the door 20.

The locking device 25 may include a shaft 25a, a door latch 25b and an elastic member 25c.

The shaft 25a is configured to pass through the door latch 25b, and is mounted to the door frame 21. The elastic member 25c provides an elastic force for restoration when the door latch 25b rotates. Accordingly, the door latch 25b is configured to rotate and restore to the door frame 21.

The front glass 23 is attached to the door frame 21, thereby forming the appearance of the front surface of the door 20. The front glass 23 is arranged to cover the opening 21' of the door frame 21. In the drawings, the front glass 23 is attached to the outer frame 21a.

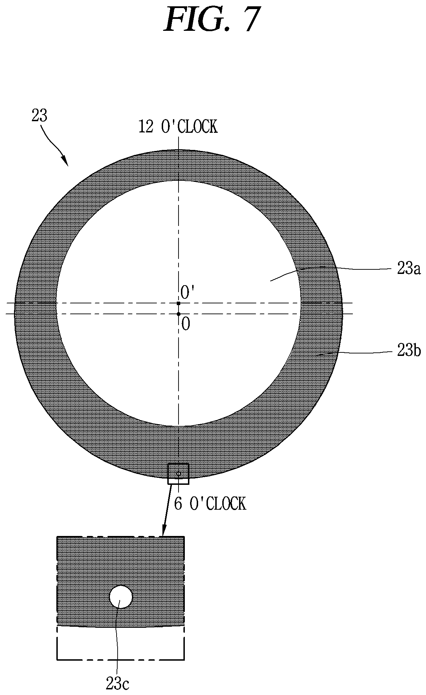

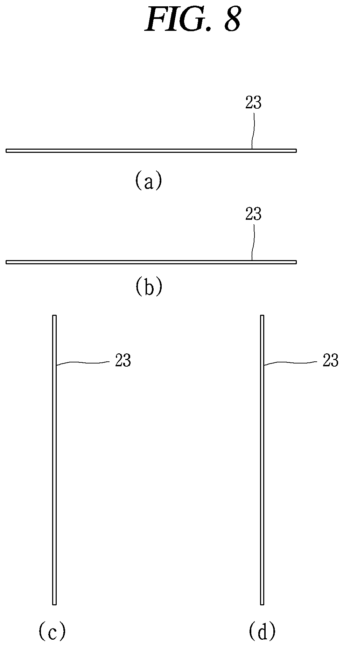

FIG. 7 is a frontal view of the front glass 23 shown in FIG. 3. And FIG. 8 shows the front glass 23 of FIG. 7, which is seen from the upper side, the lower side, the left side and the right side, respectively.

Referring to FIGS. 7 and 8, the front glass 23 includes a transparent region 23a and an opaque region 23b. The transparent region 23a means a region configured to pass at least part of light therethrough, in order to make the opposite side or the inside visible. Thus, the transparent region 23a is a concept to include a semi-transparent region 23a.

In a state that the front glass 23 has been attached to the door frame 21, the transparent region 23a is arranged to correspond to the opening 21' and the door window 22. Thus, in a closed state of the door 20, a user may view the laundry accommodation portion through the transparent region 23a.

If a center of the opening 21' is eccentric from a center of the door frame 21, a center (O') of the transparent region 23a may be positioned to be eccentric from a center (O) of the front glass 23.

The center (O') of the transparent region 23a is located at a position corresponding to the center of the opening 21'. Here, the corresponding position includes not only a complete consistency of the center, but also the same eccentric direction of the center. That is, the center (O') of the transparent region 23a and the center of the opening 21' may be consistent with each other, or an eccentric direction of the transparent region 23a may be the same as an eccentric direction of the opening 21'.

In the drawings, the center of the opening 21' is positioned to be eccentric from the center of the door frame 21, towards an upper side (a 12 o'clock direction), and the center (O') of the transparent region 23a is also positioned to be eccentric from the center (O) of the front glass 23, towards an upper side (a 12 o'clock direction). Here, the center (O') of the transparent region 23a may be consistent with the center of the opening 21'.

The opaque region 23b is formed to enclose the transparent region 23a. The opaque region 23b is arranged to cover the remaining part except for the opening 21' of the door frame 21.

The transparent region 23a and the opaque region 23b which encloses the transparent region 23a may be clearly distinguished from each other by the opaque region 23b, in the form of a boundary line.

Alternatively, a boundary between the transparent region 23a and the opaque region 23b may be formed to be indistinct by a halftone technique, for a visual movement from the transparent region 23a to the opaque region 23b. For this, the opaque region 23b includes a plurality of shielding dots formed around the transparent region 23a, and the plurality of shielding dots may be formed to have a density lowered towards the transparent region 23a.

The front glass 23 is formed as a complete circle having a preset radius. The front glass 23 is formed of a glass material. Thus, the front glass 23 is formed such that a front surface and a rear surface thereof are flat. As shown in FIG. 8, the front glass 23 is formed as a disc having a constant thickness, which is not curved when viewed in any directions, i.e., the upper, lower, right and left sides.

Since the front glass 23 formed of a glass material is formed as a complete circle and the front surface and the rear surface thereof are formed to be flat, a sophisticated feeling of the door 20 may be more enhanced than in the conventional door cover formed of a synthetic resin material and formed as an incomplete circle having a convex front surface.

A transparent align mark 23c is formed in the opaque region 23b. The align mark 23c is configured to guide an attachment position of the front glass 23 to the door frame 21. In the drawings, the align mark 23c of a circular shape is formed at a lower side (a 6 o'clock direction) of the front glass 23. However, the present disclosure is not limited to this. The align mark 23c may be formed to have a polygonal shape or a linear shape. The position of the align mark 23c may be variable.

A method for aligning the position of the front glass 23 by using the align mark 23c will be explained later.

The front glass 23 may implement the transparent region 23a, the opaque region 23b and the align mark 23c, by the following layer structure.

For instance, the front glass 23 may include a glass body formed of a glass material having a transparency, and a shielding layer arranged to cover a rear surface of the glass body and forming the opaque region 23b. Here, a part where the shielding layer is not arranged forms the transparent region 23a and the align mark 23c. The shielding layer may be formed by being glass-printed on the rear surface of the glass body.

As another example, the front glass 23 may include a glass body formed of a glass material having a transparency, and a film arranged to cover the rear surface of the glass body. The film may include a transparent part formed to have a transparency in correspondence to the transparent region 23a, an opaque part formed to have a non-transparency in correspondence to the opaque region 23b, and an align part formed to have a transparency in correspondence to the align mark 23c.

As still another example, the front glass 23 may include a glass body formed of a glass material having a transparency, and a film arranged to cover the rear surface of the glass body. This example is differentiated from the above example in that the film includes a first hole formed to correspond to the transparent region 23a, an opaque part formed to have a non-transparency in correspondence to the opaque region 23b, and a second hole formed to correspond to the align mark 23c. That is, there is a difference in that a part of the film, corresponding to the transparent region 23a and the align mark 23c, is formed to have a transparency, or is punched.

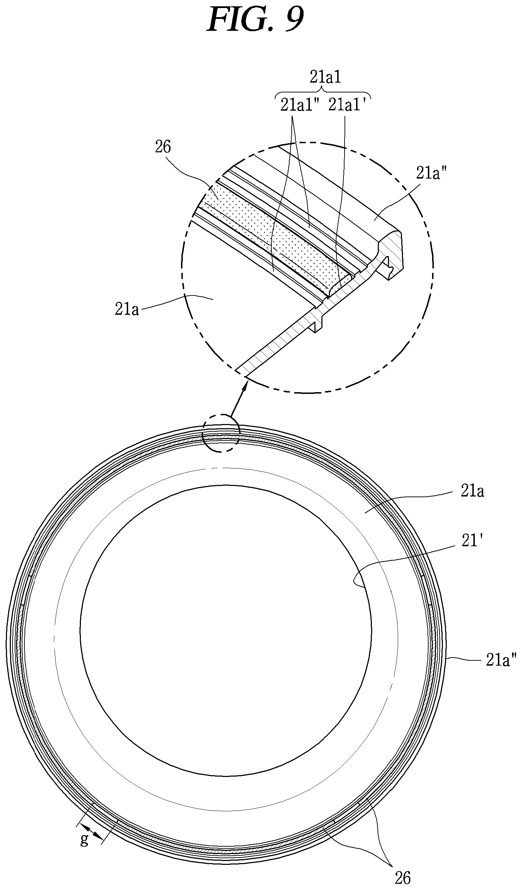

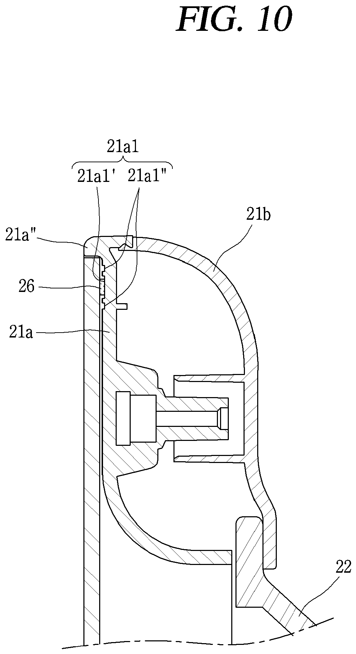

FIG. 9 is a frontal view of the door frame 21 shown in FIG. 3. And FIG. 10 is a sectional view taken along line 'A-A' in FIG. 2.

Referring to FIGS. 9 and 10, the door frame 21 includes the outer frame 21a and the inner frame 21b.

The front glass 23 is configured to be attached to the front surface of the outer frame 21a. The inner frame 21b is coupled to a rear side of the outer frame 21a. The outer frame 21a and the inner frame 21b may be coupled to each other by a pin-groove coupling, a hook coupling, a screw coupling, a bonding coupling, etc.

A mounting guide 21a" may be formed to protrude along a circumference of the outer frame 21a. The mounting guide 21a" is formed to extend in a ring shape, and forms a space to accommodate the front glass 23 therein.

The mounting guide 21a" is arranged to enclose an outer circumferential surface of the front glass 23. The mounting guide 21a" is formed to have a preset inner diameter. That is, the mounting guide 21a" is formed to have a complete circular shape. The inner diameter of the mounting guide 21a" may correspond to an outer diameter of the front glass 23.

The mounting guide 21a" may protrude by a predetermined height, so as to form the same plane as an upper surface of the front glass 23. Under the configuration, since there is no stepped-pulley between the mounting guide 21a" and the front glass 23, a more simple appearance may be implemented.

An adhesive 26 is arranged between the door frame 21 and the front glass 23, for a coupling therebetween. An adhesive filling groove 21a1 for filling the adhesive 26 is formed at the door frame 21. In the drawings, the adhesive filling groove 21a1 is formed on the front surface of the outer frame 21a.

The adhesive filling groove 21a1 is formed in a ring shape having a preset radius, along a circumference of the mounting guide 21a", so as to enclose the opening 21'. An interval between the mounting guide 21a" and the adhesive filling groove 21a1 may be constantly maintained along the circumference of the mounting guide 21a". That is, a center of the adhesive filling groove 21a1 may correspond to a center of the mounting guide 21a".

As shown, the adhesive filling groove 21a1 may include an adhesive application part 21a1' and adhesive collection parts 21al".

The adhesive application part 21a1' is a part for applying the adhesive 26, and is formed in a ring shape which encloses the opening 21'. An interval between the mounting guide 21a" and the adhesive application part 21a1'may be constantly maintained along the circumference of the mounting guide 21a". In this case, a center of the adhesive application part 21a1'corresponds to the center of the mounting guide 21a". Further, since the mounting guide 21a" is formed to enclose an outer circumference of the front glass 23 having a complete circular shape, the center of the adhesive application part 21a1' also corresponds to a center of the front glass 23.

The adhesive collection parts 21a1" configured to collect the adhesive 26 which leaks to the inside and the outside of the adhesive application part 21a1'are provided at both sides of the adhesive application part 21a1'. The adhesive collection parts 21a1" may be formed to extend in parallel along the adhesive application part 21al', in a spaced state from the adhesive application part 21a1' by a predetermined interval.

That is, the adhesive collection parts 21a1" includes a first adhesive collection part of a ring shape which encloses the adhesive application part 21a1', and a second adhesive collection part of a ring shape positioned in the adhesive application part 21a1'. That is, the adhesive application part 21a1' is formed to enclose the second adhesive collection part. Here, a center of the first adhesive collection part and a center of the second adhesive collection part correspond to the center of the adhesive application part 21a1'.

The adhesive application part 21a1' is a part where the adhesive 26 is applied, and the adhesive collection parts 21a1" are provided against an overflow of the adhesive 26. Accordingly, the adhesive collection parts 21a1" may have a narrower width than the adhesive application part 21a1'.

Under the structure, in the process of coupling the front glass 23 to the outer frame 21a, even if the adhesive 26 filled in the adhesive collection parts 21a1" leaks, the adhesive 26 may be collected to the adhesive collection parts 21a1" provided at the inside and the outside of the adhesive application part 21a1'. This may prevent a lowering of the appearance quality due to leakage of the adhesive 26.

Also, under the structure, the adhesive application part 21a1' may be arranged to be close to an edge part of the outer frame 21a, to the maximum. Here, since a corresponding non-coupling part of an edge part of the front glass 23 is minimized, a coupling intensity may be enhanced.

If a door cover formed of a synthetic resin material is used as the front glass 23, a mechanical object (a pin, a hook, etc.) for guiding a precise attachment position when coupling the door cover to the door frame 21 may be formed at the door cover. For example, a pin may be formed on a rear surface of the door cover, and a groove for inserting the pin may be formed at the door frame 21. Then, by a pin-groove coupling, the door cover may be attached to a proper position of the door frame 21.

However, if the front glass 23 formed of a glass material is used, there is a problem that a mechanical object for guiding a precise attachment position when coupling the front glass to the door frame 21 cannot be formed at the front glass 23. Therefore, the front glass 23 should be attached to a proper position of the door frame 21 by another method.

Hereinafter, an apparatus for attaching the front glass 23 to a proper position of the door frame 21, and a method for fabricating the door 20 by using the apparatus will be explained.

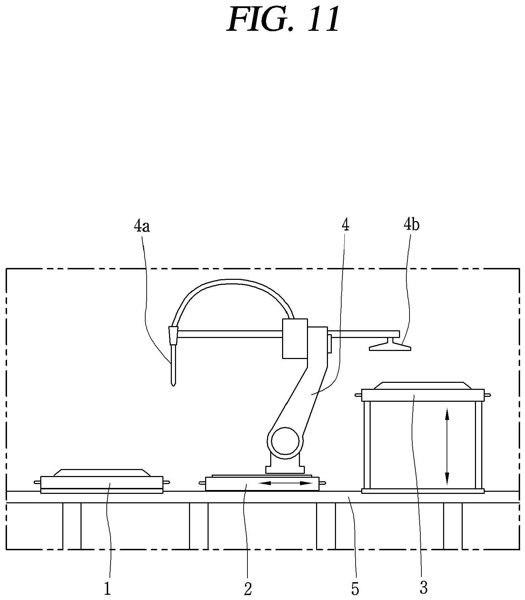

FIG. 11 is a conceptual view schematically showing an apparatus for attaching the front glass 23 shown in FIG. 3 to a proper position of the door frame 21.

Referring to FIG. 11, the apparatus includes a front glass mounting jig 1, a door frame mounting jig 2, a compression jig 3, and a robot arm 4.

The door frame mounting jig 2 is formed to be horizontally moveable through an automated rail 5. The automated rail 5 is formed to extend up to the compression jig 3, so that the door frame mounting jig 2 is moveable up to the compression jig 3.

The robot arm 4 has a movement range for covering the front glass mounting jig 1 and the door frame mounting jig 2 (the initial position). The robot arm 4 is provided with an adhesive gun 4a and an absorbing part 4b.

Hereinafter, a method for fabricating the door 20 by using the apparatus will be explained.

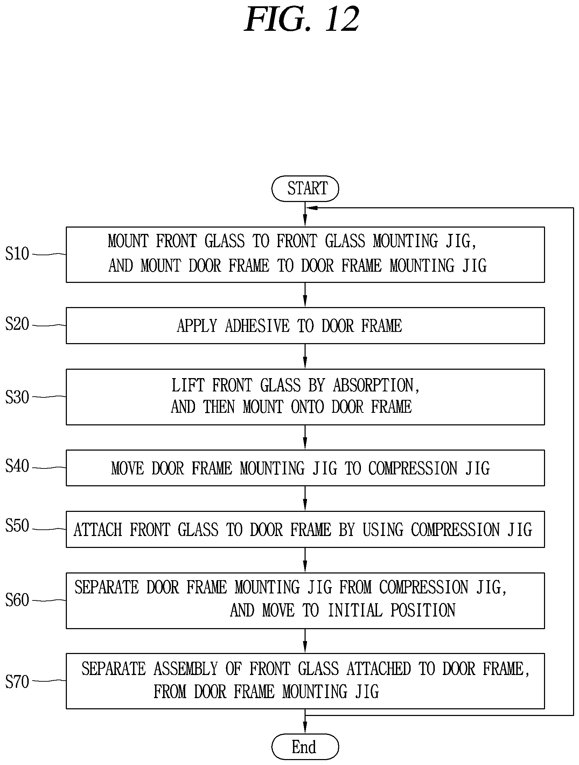

FIG. 12 is a flow chart for explaining an assembly process of the front glass 23 and the door frame 21, using the apparatus of FIG. 11.

Referring to FIG. 12, the front glass 23 is mounted to the front glass mounting jig 1, and the door frame 21 is mounted to the door frame mounting jig 2 (S10). The two processes may be performed regardless of the order.

As can be seen from the fabrication method to be explained later, a position of the front glass 23 mounted to the front glass mounting jig 1 is an attachment position of the front glass 23 to the door frame 21. Thus, the front glass 23 should be mounted to a proper position of the front glass mounting jig 1.

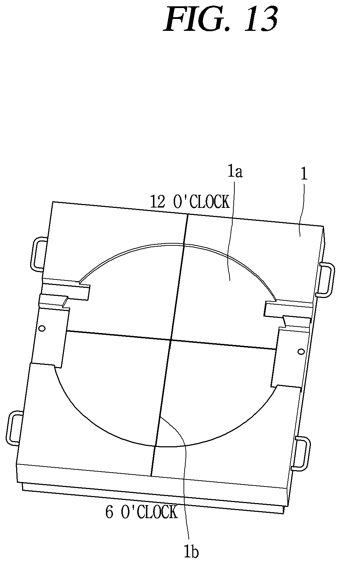

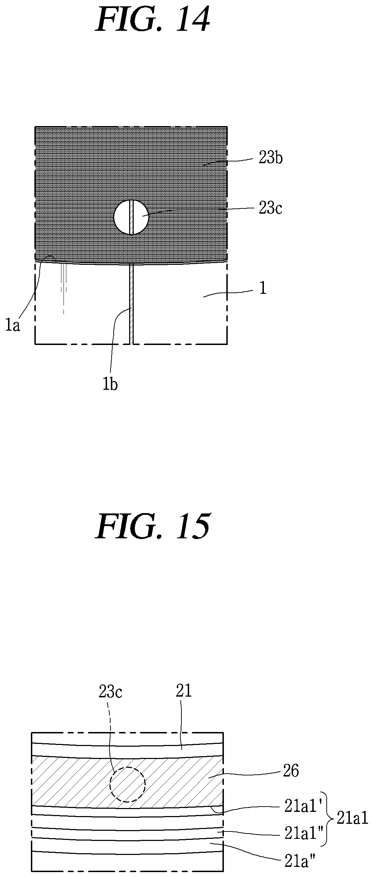

FIG. 13 is a conceptual view of the front glass mounting jig shown in FIG. 11. And FIG. 14 is a conceptual view for explaining a method for mounting the front glass 23 to a proper position of the front glass mounting jig 1 in FIG. 12.

Referring to FIG. 13, the front glass mounting jig 1 is provided with a front glass mounting portion 1a recessed from an upper surface. The front glass mounting portion 1a is formed to have a size corresponding to the front glass 23. Thus, an inner circumferential surface of the front glass mounting portion 1a may be arranged to face an outer circumferential surface of the front glass 23 with a very small preset interval.

Since the front glass 23 is formed to have a circular shape, the front glass 23 may be rotated in a mounted state to the front glass mounting portion 1a. That is, a position of the front glass 23 mounted to the front glass mounting portion 1a is not limited to a specific position.

In order to guide an attachment position of the front glass 23 to the front glass mounting jig 1, a guide mark 1b is formed at the front glass mounting jig 1, and the transparent align mark 23c is formed in the opaque region 23b of the front glass 23.

In the drawings, the guide mark 1b is formed as a straight line which connects an upper side (a 12 o'clock direction) and a lower side (a 6 o'clock direction) of the front glass 23. However, the present disclosure is not limited to this. That is, the guide mark 1b may be formed to have a polygonal shape, a circular shape, a point, etc., not a line. The position of the guide mark 1b may be changed.

Referring to FIG. 14, once the front glass 23 is positioned so that the guide mark 1b formed at the front glass mounting jig 1 is seen through the align mark 23c of the front glass 23, the front glass 23 is mounted to a proper position of the front glass mounting jig 1.

Referring to FIG. 12 again, next, the adhesive 26 is applied to the door frame 21 mounted to the door frame mounting jig 2 (S20). The application of the adhesive 26 may be performed precisely by the robot arm 4 and the adhesive gun 4a mounted to the robot arm 4. In this case, the robot arm 4 may be configured to move to the door frame mounting jig 2 from an initial position, to apply the adhesive 26 to the door frame 21 by using the adhesive gun 4a, and then to return to the initial position.

In a general case, the adhesive 26 is applied along the adhesive filling groove 21a1 at a time (an entire application method). However, in the present disclosure, the adhesive 26 is applied along the adhesive filling groove 21a1 formed to enclose the opening 21' of the door frame 21, plural times in a divided manner (a divided application method).

The adhesive 26 applied along the adhesive filling groove 21a1 plural times in the divided manner may be distinguished from each other by a predetermined separation interval (g). That is, the adhesive 26 applied each time is arranged with the predetermined separation interval (g). In the drawings, the adhesive 26 is applied at least 4 times.

According to such a divided application method, there is an advantage that the amount of the adhesive 26 to be applied is reduced, even though it takes a more application time than in the aforementioned general entire application method. Further, according to such a divided application method, since the adhesive 26 is supplied to the adhesive gun 4a little by little at the time of each application, time taken to harden the adhesive 26 filled in the adhesive gun 4a can be prolonged more than in the aforementioned general entire application method.

Then, the absorbing part 4b of the robot arm 4 lifts the front glass 23 mounted to the front glass mounting jig 1 in an absorbing manner, and then mounts the front glass 23 onto the door frame 21 mounted to the door frame mounting jig 2 (S30). Then, the robot arm 4 may be configured to return to the initial position.

Next, the door frame mounting jig 2 is moved to the compression jig 3 (S40). The door frame mounting jig 2 may be moved to the compression jig 3 through the automated rail 5.

Next, the front glass 23 is attached to the door frame 21 by using the compression jig 3 (S50). In the drawings, the front glass 23 moved to a position below a cover of the compression jig 3 is pressurized by a downward movement of the cover, thereby being attached to the door frame 21.

Next, the door frame mounting jig 2 is separated from the compression jig 3, and is moved to the initial position (S60). In the drawings, the cover is moved to the upper side, the initial position, and the door frame mounting jig 2 returns to the initial position through the automated rail 5.

In the attaching of the front glass 23 to the door frame 21 by using the aforementioned compression jig 3, and the separating of the door frame mounting jig 2 from the compression jig 3 and moving to the initial position, a part of the adhesive 26 filled in the adhesive gun 4a is discarded. This is in order to prevent a blocking of a hole of the adhesive gun 4a for applying the adhesive 26.

More specifically, an assembly process of the front glass 23 and the door frame 21 is repeatedly performed. Here, if the adhesive gun 4a is not used after the adhesive 26 is applied to the adhesive filling groove 21a1, before the application process is repeated, the adhesive 26 may harden to cause a blocking of the hole of the adhesive gun 4a. For prevention of this, a discarding of the part of the adhesive 26 filled in the adhesive gun 4a is added in a process while the adhesive 26 is repeatedly applied to the adhesive filling groove 21a1.

Here, the amount of the adhesive 26 to be discarded is set to be larger than the amount of the adhesive 26 to be applied in the aforementioned applying of the adhesive 26 to the door frame 21.

Then, the assembly of the front glass 23 attached to the door frame 21 is separated from the door frame mounting jig 2 (S70).

The align mark 23c for attaching the front glass 23 to a proper position of the door frame 21 is formed at the front glass 23 which forms the front appearance of the door 20. Accordingly, if the align mark 23c remains as it is, an aesthetic feeling may be degraded externally. Especially, since the align mark 23c is formed in the opaque region 23b so as to have a transparency, it seems to be more remarkable.

Hereinafter, a structure to make the align mark 23c invisible from the outside of the door 20 will be explained.

FIG. 15 is an enlarged view of part 'B' shown in FIG. 2. In the drawings, for understanding, the front glass 23 is not displayed, but only the align mark 23c is displayed.

Referring to FIG. 15, the adhesive 26 is formed of an opaque material, and is arranged to cover the align mark 23c at a side of a rear surface of the front glass 23. That is, the align mark 23c is positioned to be overlapped on the adhesive 26 applied to the door frame 21. Thus, the align mark 23c is blocked by the adhesive 26.

The adhesive 26 may be formed in the same color as the opaque region 23b (e.g., black). In this case, the align mark 23c may be covered more completely.

As aforementioned, the adhesive filling groove 21a1 includes the adhesive application part 21a1'where the adhesive 26 is applied, and the adhesive collection parts 21a1" configured to collect the adhesive 26 which leaks to both sides of the adhesive application part 21a1'. In a relation between the front glass 23 and the door frame 21, the align mark 23c is arranged to be overlapped with the adhesive application part 21a1'.

Here, in the applying of the adhesive 26 to the door frame 21, even if the adhesive 26 is applied along the adhesive application part 21a1' plural times in a divided manner, it is set that the adhesive 26 should be applied to an overlapped part with the align mark 23c.

Like this, the adhesive 26 is arranged to cover the align mark 23c, and is formed of an opaque material, preferably, in the same color as the opaque region 23b. This may allow the align mark 23c for the alignment not to be discerned easily from the outside of the door 20. Accordingly, the appearance of the door 20 may be enhanced.

## Claims

1. A method for fabricating a door provided at a laundry treating apparatus, the method comprising:
mounting (S10) a front glass (23) to a front glass mounting jig (1), and mounting a door frame (21) to a door frame mounting jig (2), wherein the door frame (21) includes an outer frame (21a) and an inner frame (21b), and a mounting guide (21a") protrudes along an outer circumference of the outer frame (21a);
applying (S20) an adhesive (26) to the door frame (21);
lifting (S30) the front glass (23) and then mounting the front glass (23) onto the door frame (21);
moving (S40) the door frame mounting jig (2) to a compression jig (3);
attaching (S50) the front glass (23) to the door frame (21) by using the compression jig (3);
separating (S60) the door frame mounting jig (2) from the compression jig (3); and
separating (S70) an assembly of the front glass (23) attached to the door frame (21), from the door frame mounting jig (2);
wherein in the applying (S40) of the adhesive (26) to the door frame (21), the adhesive is applied along an adhesive filling groove (21a1) formed to enclose an opening (21') of the door frame (21); wherein the adhesive (26) is applied along the adhesive filling groove (21a1) in a discontinuous manner, and wherein adhesive portions are spaced apart from each by a predetermined separation interval; and
wherein the mounting guide (21a") is arranged to enclose an outer circumferential surface of the front glass (23).

2. The method of claim 1, wherein the adhesive (26) is applied to the door frame (21) at at least 4 different portions into the adhesive filling groove (21a1) for fixing the front glass (23).

3. The method of claim 2, wherein the adhesive filling groove (21a1) comprises:
an adhesive application part (21a1') configured to provide a space for applying the adhesive (26), and formed to enclose the opening (21'); and
at least one adhesive collection part (21a1") formed to extend in parallel along the adhesive application part (21a1'), at one or both sides of the adhesive application part (21a1'), so as to collect the adhesive leaking of the adhesive application part (21a1').

4. The method of any one of the claims 1, 2 or 3,
wherein the application (S20) of the adhesive (26) is performed by a robot arm (4) and an adhesive gun (4a) mounted to the robot arm (4); and
wherein in the attaching of the front glass (23) to the door frame (21) by using the compression jig (3), and the separating of the door frame mounting jig (2) from the compression jig (3) and moving to a initial position, a part of the adhesive (26) filled in an adhesive gun is discarded, so as to prevent a blocking of a hole of the adhesive gun which applies the adhesive.

5. The method of claim 4, wherein the amount of the adhesive (26) to be discarded is set to be larger than the amount of the adhesive (26) to be applied in the applying of the adhesive to the door frame (21).

6. A laundry treating apparatus, comprising:
a body (10) having a laundry introduction opening; and
a door (20) configured to open and close the laundry introduction opening, wherein the door (20) comprises:
a door frame (21) rotatably coupled to the body (10), having an opening (21') facing the laundry introduction opening in a closed state of the door (20), and having an adhesive filling groove (21a1) formed to enclose the opening (21'), wherein the door frame (21) includes an outer frame (21a) and an inner frame (21b), and a mounting guide (21a") protrudes along an outer circumference of the outer frame (21a);
a front glass (23) attached to the door frame (21) to form a front appearance of the door (20); and
an adhesive (26) applied to the adhesive filling groove (21a1) for attaching the front glass (23) to the door frame (21),
wherein the adhesive (26) is applied discontinuously at a plurality of portions along the adhesive filling groove (21a1) with separation intervals respectively therebetween; and
wherein the mounting guide (21a") is arranged to enclose an outer circumferential surface of the front glass (23).

7. The laundry treating apparatus of claim 6, wherein the adhesive filling groove (21al) comprises:
an adhesive application part (21a1') configured to provide a space for applying the adhesive (26), and formed to enclose the opening (21'); and
at least one adhesive collection part (21a1") formed to extend in parallel along the adhesive application part (21a1'), at one or both sides of the adhesive application part (21a1'), so as to collect the adhesive leaking of the adhesive application part (21a1').

8. The laundry treating apparatus of claim 7, wherein the adhesive application part (21a1') is formed in a ring shape having a preset radius.

9. The laundry treating apparatus of claim 7 or 8, wherein a center of the adhesive application part (21a1') corresponds to a center of the front glass (23).

10. The laundry treating apparatus of claim 6, 7, 8 or 9, wherein the front glass (23) is formed of a glass material, and/or is formed as a complete circle having a preset radius.

11. The laundry treating apparatus of any one of the preceding claims 6-10, wherein the front glass (23) has flat front surface and a flat rear surface.

12. The laundry treating apparatus of any one of the preceding claims 7-11, wherein the adhesive filling groove (21a1) is formed in a ring shape having a preset radius, and a center of the adhesive filling groove (21a1) corresponds to a center of the front glass (23).

13. The laundry treating apparatus of any one of the preceding claims 6-12, wherein the front glass (23) comprises:
a transparent region (23a) corresponding to the opening;
an opaque region (23b) formed to enclose the transparent region (23a); and
a transparent align mark (23c) formed in the opaque region (23b), and configured to guide an attachment position of the front glass (23) to the door frame (21);
a guide mark (1b) formed at the front glass mounting jig (1);
wherein in mounting (S10) the front glass (23) to the front glass mounting jig (1), the front glass (23) is positioned so that the guide mark (1b) formed at the front glass mounting jig (1) is seen through the align mark (23c) of the front glass (23);
wherein the adhesive (26) is applied to cover the align mark (23c).

14. The laundry treating apparatus of claim 13, wherein the adhesive (26) is formed in the same color as the opaque region (23b).

## Patentansprüche

1. Verfahren zum Fertigen einer Tür, die an einer Wäschebehandlungsvorrichtung vorgesehen ist, wobei das Verfahren die folgenden Schritte umfasst:
Montieren (S10) eines Frontglases (23) an ein Frontglas-Montagegestell (1) und Montieren eines Türrahmens (21) an ein Türrahmen-Montagegestell (2), wobei der Türrahmen (21) einen Außenrahmen (21a) und einen Innenrahmen (21b) umfasst und wobei eine Montageführung (21a") längs eines Außenumfangs des Außenrahmens (21a) vorsteht;
Auftragen (S20) eines Klebstoffs (26) auf den Türrahmen (21);
Anheben (S30) des Frontglases (23) und daraufhin Montieren des Frontglases (23) auf den Türrahmen (21);
Bewegen (S40) des Türrahmen-Montagegestells (2) zu einem Kompressionsgestell (3);
Befestigen (S50) des Frontglases (23) am Türrahmen (21) unter Verwendung des Kompressionsgestells (3);
Trennen (S60) des Türrahmen-Montagegestells (2) vom Kompressionsgestell (3); und
Trennen (S70) einer Baugruppe des Frontglases (23), das am Türrahmen (21) befestigt ist, vom Türrahmen-Montagegestell (2);
wobei beim Auftragen (S40) des Klebstoffs (26) auf den Türrahmen (21) der Klebstoff längs einer Klebstoffeinfüllrille (21a1) aufgetragen wird, die so ausgebildet ist, dass sie eine Öffnung (21') des Türrahmens (21) umgibt; wobei der Klebstoff (26) längs der Klebstoffeinfüllrille (21a1) mit Unterbrechungen aufgetragen wird und wobei die Klebstoffabschnitte mit einem festgelegten Trennabstand voneinander beabstandet sind; und
wobei die Montageführung (21a") so angeordnet ist, dass sie eine Außenumfangsfläche des Frontglases (23) umgibt.

2. Verfahren nach Anspruch 1, wobei der Klebstoff (26) am Türrahmen (21) bei wenigstens vier verschiedenen Abschnitten in die Klebstoffeinfüllrille (21a1) aufgetragen wird, um das Frontglas (23) zu fixieren.

3. Verfahren nach Anspruch 2, wobei die Klebstoffeinfüllrille (21a1) Folgendes umfasst:
ein Klebstoffauftragungsteil (21a1'), das konfiguriert ist, einen Zwischenraum zum Auftragen des Klebstoffs (26) bereitzustellen, und das so ausgebildet ist, dass es die Öffnung (21') umgibt; und
wenigstens ein Klebstoffsammelteil (21a1"), das so ausgebildet ist, dass es parallel längs des Klebstoffauftragungsteils (21a1') auf einer oder beiden Seiten des Klebstoffauftragungsteils (21a1') verläuft, um den Klebstoff zu sammeln, der aus dem Klebstoffauftragungsteil (21a1') austritt.

4. Verfahren nach einem der Ansprüche 1, 2 oder 3,
wobei das Auftragen (S20) des Klebstoffs (26) durch einen Roboterarm (4) und eine Klebstoffpistole (4a), die am Roboterarm (4) montiert ist, durchgeführt wird; und
wobei beim Befestigen des Frontglases (23) am Türrahmen (21) unter Verwendung des Kompressionsgestells (3) und beim Trennen des Türrahmen-Montagegestells (2) vom Kompressionsgestell (3) und beim Bewegen zu einer Ausgangsposition ein Teil des Klebstoffs (26), der in eine Klebstoffpistole gefüllt ist, entsorgt wird, um ein Blockieren eines Lochs der Klebstoffpistole, die den Klebstoff aufträgt, zu verhindern.

5. Verfahren nach Anspruch 4, wobei die Menge des Klebstoffs (26), der entsorgt wird, so festgelegt ist, dass sie größer als die Menge des Klebstoffs (26) ist, der beim Auftragen des Klebstoffs auf den Türrahmen (21) aufgetragen wird.

6. Wäschebehandlungsvorrichtung, die Folgendes umfasst:
einen Körper (10), der eine Wäscheeinfüllöffnung hat; und
eine Tür (20), die konfiguriert ist, die Wäscheeinfüllöffnung zu öffnen und zu schließen, wobei die Tür (20) Folgendes umfasst:
einen Türrahmen (21), der mit dem Körper (10) drehbar verbunden ist und eine Öffnung (21') hat, die im geschlossenen Zustand der Tür (20) zur Wäscheeinfüllöffnung zeigt, und der eine Klebstoffeinfüllrille (21a1) hat, die so ausgebildet ist, dass sie die Öffnung (21') umgibt, wobei der Türrahmen (21) einen Außenrahmen (21a) und einen Innenrahmen (21b) umfasst und wobei eine Montageführung (21a") längs eines Außenumfangs des Außenrahmens (21a) vorsteht;
ein Frontglas (23), das am Türrahmen (21) befestigt ist, um ein vorderes Erscheinungsbild der Tür (20) zu bilden; und
einen Klebstoff (26), der auf die Klebstoffeinfüllrille (21a1) aufgetragen wird, um das Frontglas (23) am Türrahmen (21) zu befestigen,
wobei der Klebstoff (26) mit Unterbrechungen bei mehreren Abschnitten längs der Klebstoffeinfüllrille (21a1) mit jeweils dazwischen liegenden Trennabständen aufgetragen wird; und
wobei die Montageführung (21a") so angeordnet ist, dass sie eine Außenumfangsfläche des Frontglases (23) umgibt.

7. Wäschebehandlungsvorrichtung nach Anspruch 6, wobei die Klebstoffeinfüllrille (21a1) Folgendes umfasst:
ein Klebstoffauftragungsteil (21a1'), das konfiguriert ist, einen Raum zum Auftragen des Klebstoffs (26) bereitzustellen, und das so ausgebildet ist, dass es die Öffnung (21') umgibt; und
wenigstens ein Klebstoffsammelteil (21a1"), das so ausgebildet ist, dass es parallel längs des Klebstoffauftragungsteils (21a1') auf einer oder beiden Seiten des Klebstoffauftragungsteils (21a1') verläuft, um den Klebstoff zu sammeln, der aus dem Klebstoffauftragungsteil (21a1') austritt.

8. Wäschebehandlungsvorrichtung nach Anspruch 7, wobei das Klebstoffauftragungsteil (21a1') in einer Ringform ausgebildet ist, die einen festgelegten Radius hat.

9. Wäschebehandlungsvorrichtung nach Anspruch 7 oder 8, wobei die Mitte des Klebstoffauftragungsteils (21a1') der Mitte des Frontglases (23) entspricht.

10. Wäschebehandlungsvorrichtung nach Anspruch 6, 7, 8 oder 9, wobei das Frontglas (23) aus einem Glasmaterial gebildet ist und/oder als ein vollständiger Kreis ausgebildet ist, der einen festgelegten Radius hat.

11. Wäschebehandlungsvorrichtung nach einem der vorhergehenden Ansprüche 6-10, wobei das Frontglas (23) eine flache Vorderseite und eine flache Rückseite hat.

12. Wäschebehandlungsvorrichtung nach einem der vorhergehenden Ansprüche 7-11, wobei die Klebstoffeinfüllrille (21a1) in Ringform ausgebildet ist, die einen festgelegten Radius hat, und wobei die Mitte der Klebstoffeinfüllrille (21a1) der Mitte des Frontglases (23) entspricht.

13. Wäschebehandlungsvorrichtung nach einem der Ansprüche 6-12, wobei das Frontglas (23) Folgendes umfasst:
einen lichtdurchlässigen Bereich (23a), der der Öffnung entspricht;
einen lichtundurchlässigen Bereich (23b), der so ausgebildet ist, dass er den lichtdurchlässigen Bereich (23a) umgibt; und
eine lichtdurchlässige Ausrichtungsmarkierung (23c), die im lichtundurchlässigen Bereich (23b) ausgebildet ist und konfiguriert ist, eine Befestigungsposition des Frontglases (23) am Türrahmen (21) zu führen;
eine Führungsmarkierung (1b), die am Frontglas-Montagegestell (1) ausgebildet ist;
wobei beim Montieren (S10) des Frontglases (23) am Frontglas-Montagegestell (1) das Frontglas (23) so positioniert ist, dass die Führungsmarkierung (1b), die am Frontglas-Montagegestell (1) ausgebildet ist, durch die Ausrichtungsmarkierung (23c) des Frontglases (23) sichtbar ist;
wobei der Klebstoff (26) so aufgetragen wird, dass er die Ausrichtungsmarkierung (23c) bedeckt.

14. Wäschebehandlungsvorrichtung nach Anspruch 13, wobei der Klebstoff (26) in der gleichen Farbe wie der lichtundurchlässige Bereich (23b) ausgebildet ist.

## Revendications

1. Procédé pour fabriquer une porte agencée sur un appareil de traitement de linge, le procédé comportant les étapes consistant à :
monter (S10) une vitre avant (23) sur un gabarit de montage de vitre avant (1), et monter un châssis de porte (21) sur un gabarit de montage de châssis de porte (2), dans lequel le châssis de porte (21) inclut un châssis extérieur (21a) et un châssis intérieur (21b), et un guide de montage (21a") fait saillie le long d'une circonférence extérieure du châssis extérieur (21a) ;
appliquer (S20) un adhésif (26) sur le châssis de porte (21) ;
lever (S30) la vitre avant (23) et monter ensuite la vitre avant (23) sur le châssis de porte (21) ;
déplacer (S40) le gabarit de montage de châssis de porte (2) jusqu'à un gabarit de compression (3) ;
fixer (S50) la vitre avant (23) au châssis de porte (21) en utilisant le gabarit de compression (3) ;
séparer (S60) le gabarit de montage de châssis de porte (2) du gabarit de compression (3) ; et
séparer (S70) un ensemble de la vitre avant (23) fixée au châssis de porte (21), du gabarit de montage de châssis de porte (2) ;
dans lequel pendant l'application (S40) de l'adhésif (26) sur le châssis de porte (21), l'adhésif est appliqué le long d'une rainure de remplissage d'adhésif (21a1) formée de manière à entourer un orifice (21') du châssis de porte (21) ; dans lequel l'adhésif (26) est appliqué le long de la rainure de remplissage d'adhésif (21a1) d'une manière discontinue, et dans lequel des portions d'adhésif sont espacées les unes des autres par un intervalle de séparation prédéterminé ; et
dans lequel le guide de montage (21a") est agencé de manière à entourer une surface circonférentielle extérieure de la vitre avant (23).

2. Procédé selon la revendication 1, dans lequel l'adhésif (26) est appliqué sur le châssis de porte (21) sur au moins 4 portions différentes dans la rainure de remplissage d'adhésif (21a1) pour fixer la vitre avant (23).

3. Procédé selon la revendication 2, dans lequel la rainure de remplissage d'adhésif (21a1) comporte :
une partie d'application d'adhésif (21a1') configurée pour fournir un espace pour appliquer l'adhésif (26), et formée pour entourer l'orifice (21') ; et
au moins une partie de recueil d'adhésif (21a1") formée pour s'étendre parallèlement le long de la partie d'application d'adhésif (21a1'), sur un ou deux côtés de la partie d'application d'adhésif (21a1'), de manière à recueillir l'adhésif s'échappant de la partie d'application d'adhésif (21a1').

4. Procédé selon l'une quelconque des revendications 1, 2 ou 3,
dans lequel l'application (S20) de l'adhésif (26) est réalisée par un bras de robot (4) et un pistolet d'adhésif (4a) monté sur le bras de robot (4) ; et
dans lequel pendant la fixation de la vitre avant (23) au châssis de porte (21) en utilisant le gabarit de compression (3), et la séparation du gabarit de montage de châssis de porte (2) du gabarit de compression (3) et le déplacement jusqu'à une position initiale, une partie de l'adhésif (26) versé dans un pistolet d'adhésif est mise au rebut, de manière à empêcher un blocage d'un trou du pistolet d'adhésif qui applique d'adhésif.

5. Procédé selon la revendication 4, dans lequel la quantité de l'adhésif (26) à mettre au rebut est réglée pour être supérieure à la quantité de l'adhésif (26) à appliquer pendant l'application de l'adhésif sur le châssis de porte (21).

6. Appareil de traitement de linge comportant :
une carrosserie (10) ayant un orifice d'introduction de linge ; et
une porte (20) configurée pour ouvrir et fermer l'orifice d'introduction de linge, dans lequel la porte (20) comporte :
un châssis de porte (21) couplé en rotation à la carrosserie (10), ayant un orifice (21') en face de l'orifice d'introduction de linge dans un état fermé de la porte (20), et ayant une rainure de remplissage d'adhésif (21a1) formée pour entourer l'orifice (21'), dans lequel le châssis de porte (21) inclut un châssis extérieur (21a) et un châssis intérieur (21b), et un guide de montage (21a") fait saillie le long d'une circonférence extérieure du châssis extérieur (21a) ;
une vitre avant (23) fixée au châssis de porte (21) pour former un aspect avant de la porte (20) ; et
un adhésif (26) appliqué à la rainure de remplissage d'adhésif (21a1) pour fixer la vitre avant (23) au châssis de porte (21),
dans lequel l'adhésif (26) est appliqué de manière discontinue sur une pluralité de portions le long de la rainure de remplissage d'adhésif (21a1) avec des intervalles de séparation respectivement entre celles-ci ; et
dans lequel le guide de montage (21a") est agencé de manière à entourer une surface circonférentielle extérieure de la vitre avant (23).

7. Appareil de traitement de linge selon la revendication 6, dans lequel la rainure de remplissage d'adhésif (21a1) comporte :
une partie d'application d'adhésif (21a1') configurée pour fournir un espace pour appliquer l'adhésif (26), et formée pour entourer l'orifice (21') ; et
au moins une partie de recueil d'adhésif (21a1") formée pour s'étendre parallèlement le long de la partie d'application d'adhésif (21a1'), sur un ou deux côtés de la partie d'application d'adhésif (21a1'), de manière à recueillir l'adhésif s'échappant de la partie d'application d'adhésif (21a1').

8. Appareil de traitement de linge selon la revendication 7, dans lequel la partie d'application d'adhésif (21a1') a une forme annulaire ayant un rayon prédéfini.

9. Appareil de traitement de linge selon la revendication 7 ou 8, dans lequel un centre de la partie d'application d'adhésif (21a1') correspond à un centre de la vitre avant (23).

10. Appareil de traitement de linge selon la revendication 6, 7, 8 ou 9, dans lequel la vitre avant (23) est formée en verre et/ou est formée comme un cercle complet ayant un rayon prédéfini.

11. Appareil de traitement de linge selon l'une quelconque des revendications 6 à 10 précédentes, dans lequel la vitre avant (23) a une surface avant plane et une surface arrière plane.

12. Appareil de traitement de linge selon l'une quelconque des revendications 7 à 11 précédentes, dans lequel la rainure de remplissage d'adhésif (21a1) a une forme annulaire ayant un rayon prédéfini, et un centre de la rainure de remplissage d'adhésif (21a1) correspond à un centre de la vitre avant (23).

13. Appareil de traitement de linge selon l'une quelconque des revendications 6 à 12 précédentes, dans lequel la vitre avant (23) comporte :
une zone transparente (23a) correspondant à l'orifice ;
une zone opaque (23b) formée pour entourer la zone transparente (23a) ; et
une marque d'alignement transparente (23c) formée dans la zone opaque (23b) et configurée pour guider une position de fixation de la vitre avant (23) au châssis de porte (21) ;
une marque de guidage (1b) formée sur le gabarit de montage de vitre avant (1) ;
dans lequel lors du montage (S10) de la vitre avant (23) sur le gabarit de montage de vitre avant (23), la vitre avant (23) est positionnée de sorte que la marque de guidage (1b) formée sur le gabarit de montage de vitre avant (23) est vue à travers la marque d'alignement (23c) de la vitre avant (23) ;
dans lequel l'adhésif (26) est appliqué pour recouvrir la marque d'alignement (23c).

14. Appareil de traitement de linge selon la revendication 13, dans lequel l'adhésif (26) est formé de la même couleur que la zone opaque (23b).
